# EUROPÄISCHE PATENTSCHRIFT

(11) **EP 2 225 814 B1**
(45) Veröffentlichungstag und Bekanntmachung des Hinweises auf die Patenterteilung: **09.11.2016**
(21) Anmeldenummer: 08856446.3
(22) Anmeldetag: 17.11.2008
(51) Int. Cl.: H02J 5/00, H04B 5/00

(54) **VORRICHTUNG ZUR BERÜHRUNGSLOSEN ENERGIEÜBERTRAGUNG UND ANLAGE MIT ELEKTRISCHEN VERBRAUCHERN**
DEVICE FOR NON-CONTACT ENERGY TRANSMISSION AND ARRANGEMENT WITH ELECTRIC LOADS
DISPOSITIF DE TRANSMISSION D'ÉNERGIE SANS CONTACT ET INSTALLATION DOTÉE DE CONSOMMATEURS ÉLECTRIQUES

(30) Priorität: 06.12.2007 DE 102007059046
(43) Veröffentlichungstag der Anmeldung: 08.09.2010
(73) Patentinhaber: SEW-EURODRIVE GmbH & Co. KG, 76646 Bruchsal (DE)
(72) Erfinder: HUA, Zhidong, 76131 Karlsruhe (DE); SIMON, Olaf, 76646 Bruchsal (DE)
(74) Vertreter: Tüngler, Eberhard
(86) Internationale Anmeldenummer: PCT/EP2008/009707
(87) Internationale Veröffentlichungsnummer: WO 2009/071175

(56) Entgegenhaltungen:
- EP-A- 1 693 863
- WO-A-2008/058627
- DE-A1- 10 026 173

## Beschreibung

Die Erfindung betrifft eine Vorrichtung zur berührungslosen Energieübertragung mit einem Primärleiter und wenigstens einer relativ zum Primärleiter bewegliche Einheit mit einer Sekundärinduktivität, wobei Primärleiter und Sekundärinduktivität induktiv gekoppelt sind und an die Sekundärinduktivität wenigstens ein elektrischer Verbraucher angeschlossen und über die Sekundärinduktivität aus dem Primärleiter mit elektrischer Energie versorgt ist und eine Anlage mit elektrischen Verbrauchern, die induktiv aus einem Primärleiter versorgbar sind.

Eine derartige Vorrichtung und eine derartige Anlage sind aus der WO 2006/119 830 A1 und der DE 10 2006 004 700 A1 bekannt. Während die WO 2006/119 830 A1 keine Datenübertragung an die wenigstens eine bewegliche Einheit vorsieht, schlägt die DE 10 2006 004 700 A1 vor, dass ein Leistungssignal zur Versorgung der beweglichen Einheiten und ein Datensignal zur Kommunikation der beweglichen Einheiten abwechselnd an einen Primärleiter angelegt und induktiv ausgekoppelt und/oder eingekoppelt werden, wodurch die Störung des Datensignals durch das Leistungssignal vermindert wird. Dies begrenzt allerdings die verfügbare Datenübertragungskapazität des Primärleiters, da das Leistungssignal naturgemäß nicht beliebig lange unterbrochen werden kann.

Aus DE 100 26 173 A1 ist eine Vorrichtung zur Übertragung elektrischer Energie bekannt, bei welcher pro Kontaktstelle ein Schaltregler ausgebildet ist.

Aus EP 1 693 863 A1 sind ein Bekleidungsstück mit induktiver Energieübertragung sowie eine induktive Verbindung bekannt, wobei das Bekleidungsstück mindestens eine Vorrichtung zum Herstellen und Lösen elektrischer Verbindungen mit Zentrierüberständen aufweist, wobei mindestens eine Vorrichtung zum Herstellen und Lösen elektrischer Verbindungen eine induktive Übertragung elektrischer Energie ermöglicht.

Aus der nachveröffentlichten WO 2008/058627 A2 sind eine Maschine oder Anlage und ein Verfahren bekannt, wobei eine elektronische Schaltung und ein Verbraucher zum Datenaustausch über ein Bussystem verbunden sind.

Der Erfindung liegt daher die Aufgabe zugrunde, eine Vorrichtung und eine Anlage der genannten Art dergestalt weiterzubilden, dass die Datenübertragung verbessert ist.

Erfindungsgemäß wird die Aufgabe bei der Vorrichtung zur berührungslosen Energieübertragung nach den in Anspruch 1 angegebenen Merkmalen gelöst.

Wichtige Merkmale der Erfindung einer Vorrichtung zur berührungslosen Energieübertragung sind somit, dass an den Primärleiter eine erste Datenübertragungseinrichtung angeschlossen oder angekoppelt ist, dass an der beweglichen Einheit eine elektrisch leitfähige Koppelfläche ausgebildet ist, dass die elektrisch leitfähige Koppelfläche mit dem Primärleiter ein kapazitives Koppelelement bildet, dass an der beweglichen Einheit eine zweite Datenübertragungseinrichtung vorgesehen ist, die an die leitfähige Koppelfläche angeschlossen ist und dass zwischen der ersten Datenübertragungseinrichtung und der zweiten Datenübertragungseinrichtung über den Primärleiter Daten übertragbar sind. Es wird durch die Ausbildung von elektrischen Koppelflächen somit eine zusätzliche Möglichkeit der Ankopplung der beweglichen Einheiten an den Primärleiter, der als System aus einem einzelnen Leiter oder zwei oder mehr parallel geführten Leitern bestehen kann, bereitgestellt. Die beweglichen Einheiten sind induktiv zur Entnahme von elektrischer Leistung zu ihrem Betrieb aus dem Primärleiter an denselben gekoppelt und gemäß der Erfindung kapazitiv zur Entnahme oder zum Austausch von Datensignalen aus bzw. mit dem Primärleiter an denselben gekoppelt. Somit ist die Ein- und Auskoppelung von Datensignalen physikalisch unabhängig von der Auskoppelung der zur Versorgung der beweglichen Einheiten vorgesehenen elektrischen Leistung, also des Leistungssignals, durchführbar. Eine Störung der Datensignale durch das Leistungssignal ist somit vermindert. Die Ankoppelung zum Austausch der Datensignale und die Ankoppelung zur Abzweigung des Leistungssignals - oder eines Anteils davon - sind somit getrennt voneinander optimierbar. Die induktive Ankoppelung zur Abzweigung des Leistungssignals trägt dem Umstand Rechnung, dass das Leistungssignal im Primärleiter als gleichmäßiges sinusförmiges Signal fester Frequenz anliegt und dass zur Versorgung der beweglichen Einheiten Leistungen von einigen kW über die Ankopplungseinrichtung übertragen werden, während die kapazitive Ankopplung zur Ein-und Auskopplung von Datensignalen auf den und von dem Primärleiter eine verzerrungsarme Übertragung der mit im Vergleich zum Leistungssignal geringer Leistung übertragenen Datensignale über die Ankopplungseinrichtung erlaubt.

Unter Koppelfläche wird in dieser Anmeldung generell ein dreidimensional ausgedehntes Objekt verstanden, bei dem die Ausdehnung in einer Dimensionsrichtung wesentlich geringer, also weniger als ein Zehntel, als die Ausdehnung in zwei weiteren Dimensionsrichtungen ist. Die Koppelfläche ist somit in Idealisierung durch eine mathematische Fläche, eben oder gekrümmt, beispielsweise eine Kugeloberfläche oder eine Zylindermantelfläche oder eine unregelmäßige Fläche, im dreidimensionalen Raum beschrieben. Somit bilden beispielsweise Kupferbahnen einer Leiterplatte oder Flachbandkabel, bei denen die Adern zumindest an einem Punkt elektrisch verbunden sind, eine Koppelfläche.

Bei einer vorteilhaften Ausgestaltung ist der Primärleiter als langgestreckte Leiterschleife ausgeführt und weist einen Hinleiter und einen Rückleiter auf, wobei die von dem Primärleiter überdeckte Fläche ein Vielfaches der von der Sekundärinduktivität überdeckten Fläche beträgt. Vorzugsweise ist die wenigstens eine bewegliche Einheit entlang des Primärleiters verschiebbar. Durch die langgestreckte Verlegung des Primärleiters sind die beweglichen Einheiten über einen weiten Bereich, beispielsweise mehr als 10m oder sogar mehr als 50m oder 100m, bewegbar und für eine Datenkommunikation zugänglich. Der mindestens zweiadrig oder zweipolig ausgeführte Primärleiter ist nach außen zusätzlich abschirmbar, so dass Funkstörungen aus dem Datensignal oder dem Leistungssignal herabgesetzt werden. Vorteilhaft weist der Primärleiter am Leiterende, also an dem Übergang vom Hinleiter zum Rückleiter, einen Wellenabschlusswiderstand für die Datensignale auf.

Bei einer vorteilhaften Ausgestaltung formt der Primärleiter eine Spule mit kreisförmigen oder gebogen geführten Windungen, und die Sekundärinduktivität umfasst eine Spule mit kreisförmigen oder gebogen geführten Windungen. Die Spule des Primärleiters und die Spule der Sekundärinduktivität sind konzentrisch angeordnet und auch die elektrisch leitfähige Koppelfläche und die Spule der Sekundärinduktivität sind konzentrisch angeordnet. Die elektrisch leitfähige Koppelfläche ist dabei vorteilhaft radial außerhalb oder innerhalb der Spule des Primärleiters oder zwischen der Spule des Primärleiters und der Sekundärinduktivität angeordnet. Vorzugsweise ist die bewegliche Einheit relativ zu der Spule des Primärleiters um eine Achse drehbar. Somit sind auf rotierenden Teilen, beispielsweise Transportwalzen in einer Druck- oder Vervielfältigungsmaschine, angeordnete Verbraucher mit Daten störungsarm versorgbar oder derartige Verbraucher können Daten störungsarm übertragen. Solche Daten können Steuerkommandos für diese Verbraucher sein oder Daten über den Zustand von mechanischen oder elektrischen Einheiten auf dem rotierenden Teil oder auch Daten über den erfolgreichen oder fehlerhaften Transport von Papier, Daten über den Betriebszustand oder weitere Daten. Die Datenübertragungseinrichtung ist vorteilhaft mit ihrem zweiten Datenanschluss an einen gemeinsamen Massenanschluss angeschlossen.

Bei einer vorteilhaften Ausgestaltung weist die bewegliche Einheit zwei elektrisch leitfähige Koppelflächen auf, wobei eine elektrisch leitfähige Koppelfläche mit dem Hinleiter ein kapazitives Koppelelement bildet, die andere elektrisch leitfähige Koppelfläche mit dem Rückleiter ein kapazitives Koppelelement bildet und die Ausgänge der zweiten Datenübertragungseinrichtung an beide elektrisch leitfähige Koppelflächen angeschlossen sind zur Aus- und/oder Einkopplung von Gegentaktsignalen von dem/auf den Primärleiter. Über Hinleiter und Rückleiter ist somit ein Datensignal, dass sich aus zwischen beide Leiter angelegten Gegentaktsignalen zusammensetzt, übertragbar. Eine Rückführung des Datensignals über eine gemeinsame Masse ist daher verzichtbar. Dies vermindert den Einfluss von Störgrößen und verbessert nochmals die Übertragung.

Gemäß einer Ausführung der Erfindung ist/sind die elektrische Koppelfläche oder die elektrischen Koppelflächen in Bereichen um den Primärleiter angeordnet und/oder ausgerichtet sind, in denen die durch die induktive Kopplung der Sekundärinduktivität an den Primärleiter erzeugte magnetische Feldstärke im Wesentlichen verschwindet und/oder tangential zu der elektrisch leitfähigen Koppelfläche oder den elektrisch leitfähigen Koppelflächen ist. Somit wird vorteilhaft erreicht, dass der Anteil der magnetischen Feldstärke, der die Koppelflächen senkrecht durchstößt, minimal ist. Der tangential zu den Koppelflächen orientierte Anteil der magnetischen Feldstärke kann wegen der flächenhaft dünnen Ausführung der Koppelflächen keinen störenden Wirbelstrom anwerfen.

Bei einer vorteilhaften Ausgestaltung umfasst die Sekundärinduktivität eine Spule, und es sind die Windungen der Spule in einer Ebene angeordnet. Die Sekundärinduktivität umfasst daher eine Aufnehmereinheit mit einem flachen Spulenkopf, der beispielsweise ohne nennenswerten Platzbedarf an der Unterseite eines Fahrzeuges montierbar ist. Vorhandene Anlagen mit fahrerlosen Transportsystemen oder mit spurgeführten Transportsystemen sind daher mit geringen Kosten mit einer erfindungsgemäßen Vorrichtung ausrüstbar.

Bei einer vorteilhaften Ausgestaltung ist/sind die elektrisch leitfähige Koppelfläche oder die elektrisch leitfähigen Koppelflächen parallel zu der durch Windungen der Spule beschriebenen Ebene ausgerichtet. Von Vorteil ist dabei, dass die Bauhöhe der Vorrichtung quer zu der Ebene minimiert ist. Die Vorrichtung ist somit in einem besonders flach ausgeführten Aufnahmekopf integrierbar.

Bei einer vorteilhaften Ausgestaltung umfasst die Sekundärinduktivität eine Spule, deren Windungen eine ovale Form aufweisen. Besonders günstig ist es, wenn die ovale Form zwei gerade, parallel verlaufende Bereiche auf, wobei die parallel verlaufenden Bereiche parallel zu der Verlaufsrichtung des Primärleiters ausgerichtet sind. Unter einer ovalen Form wird allgemein die Form einer geschlossenen, in einer Ebene liegenden, sich nicht kreuzenden Kurve mit einer langen und einer kurzen Seite verstanden, beispielsweise eine Ellipsenform oder Eiform oder die typische Form der Aschenbahn eines Stadions oder einer Rennstrecke im Motorsport, welche die Form eines Rechtecks bzw. Dreiecks mit abgerundeten Kurven hat. Die ovale Form hat sich in Versuchen als besonders günstig für Auskopplung des Leistungssignals mit hohem Wirkungsgrad aus dem Primärleiter erwiesen, wobei die lange Seite der ovalen Form entlang des Primärleiters orientiert ist. Durch die Ausbildung von geraden, parallel verlaufenden Bereichen wird einerseits eine gute induktive Ankopplung der Sekundärinduktivität an den Primärleiter zur Energieübertragung mit geringen Verlusten erreicht und andererseits ein Bereich nahe der Windungen der Sekundärwicklung geschaffen, in dem das magnetische Feld der induktiven Energieübertragung eine geringe Feldstärke aufweist und in dem daher vorteilhaft die elektrische Koppelfläche oder die elektrischen Koppelflächen angeordnet werden können.

Bei einer vorteilhaften Ausgestaltung ist/sind die elektrisch leitfähige Koppelfläche oder die elektrisch leitfähigen Koppelflächen zwischen der Sekundärinduktivität und dem Primärleiter angeordnet. Durch diese Anordnung wird die überraschende Erkenntnis nutzbar, dass die Sekundärinduktivität mit dem Primärleiter durch die induktive Ankopplung geschlossene Magnetfeldlinien ausbildet, welche den Primärleiter und die Windungen der Sekundärinduktivität umschließen und also um die Koppelfläche des kapazitiven Koppelelements herum, aber nur zu geringem Teil durch diese hindurch, verlaufen, während das kapazitive Koppelelement elektrische Feldlinien ausbildet, die am Primärleiter einerseits und an der elektrisch leitfähigen Koppelfläche der beweglichen Einheit andererseits enden und wegen der Anordnung dieser Koppelfläche vom Primärleiter aus vor der Sekundärinduktivität nicht durch die Windungen der Sekundärinduktivität hindurch treten müssen. Somit werden kapazitive Kopplung und induktive Kopplung physikalisch getrennt. Eine störende Beeinflussung des relativ schwachen Datensignals durch das relativ starke Leistungssignal ist somit vermindert.

Bei einer vorteilhaften Ausgestaltung decken die oder jede elektrisch leitfähige Koppelfläche einen Abschnitt der Windungen der Sekundärinduktivität auf der dem Primärleiter zugewandten Seite ab. Somit nutzt die Erfindung für eine weitere Entstörung der Datenübertragung die Erkenntnis, dass die magnetische Feldstärke im induktiven Koppelelement auf der direkten Verbindungslinie zwischen den jeweils nächstgelegenen Bereichen der Sekundärinduktivität-Windungen und dem Abschnitt des Primärleiters, insbesondere des Hinleiters oder Rückleiters, betragsmäßig besonders schwach ist. Ein Einkoppeln des Leistungssignals in die kapazitive Kopplung ist somit nochmals vermindert.

Bei einer vorteilhaften Ausgestaltung ist die Abmessung der oder jeder elektrisch leitfähigen Koppelfläche quer zur Richtung des Stromflusses in der Sekundärinduktivität in dem jeweils durch die elektrisch leitfähige Koppelfläche oder die elektrisch leitfähigen Koppelflächen abgedeckten Bereich der Windungen der Sekundärinduktivität durch die Abmessung des abgedeckten Bereichs der Windungen der Sekundärinduktivität quer zur Richtung des Stromflusses in der Sekundärinduktivität in dem jeweils durch die elektrisch leitfähige Koppelfläche oder die elektrisch leitfähigen Koppelflächen abgedeckten Bereich der Windungen der Sekundärinduktivität begrenzt oder gleicht dieser. Vorzugsweise folgen die elektrisch leitfähigen Koppelflächen somit jeweils in einem Abschnitt dem Verlauf der Windungen und schmiegen sich an diesen an. Durch die Vermeidung von über die Abmessungen der Sekundärinduktivität quer zu deren Verbindungslinie mit dem Primärleiter überstehenden Anteilen der elektrisch leitfähigen Koppelflächen wird weitestgehend verhindert, dass magnetische Feldlinien diese Koppelflächen senkrecht durchstoßen und somit die Datenübertragung störende Wirbelströme in dem kapazitiven Koppelelement sekundärseitig generiert werden.

Besonders günstig ist es, wenn die elektrisch leitfähige Koppelfläche oder die elektrisch leitfähigen Koppelflächen über den geraden, parallel verlaufenden Bereichen der ovalen Form der Sekundärinduktivität angeordnet ist/sind. Denn über den geraden Bereichen ist der Verlauf der magnetischen Feldlinien besonders gleichmäßig verteilt, so dass eine Induktion von Wirbelströmen in der kapazitiven Koppelfläche durch eine einfache Formgebung der Fläche besonders gut vermeidbar ist. Insbesondere sind gerade geführte oder rechteckige Koppelflächen verwendbar.

In der erfindungsgemäßen Ausgestaltung ist in den Primärleiter ein Wechselstrom konstanter Frequenz eingeprägt. Somit ist die Sekundärinduktivität auf diese Frequenz abstimmbar, insbesondere in ihren Abmessungen und ihrer Form dimensionierbar, zur Erreichung eines hohen Wirkungsgrads für die induktive Leistungsversorgung.

In der erfindungsgemäßen Ausgestaltung ist weiterhin an die Sekundärinduktivität ein Resonanzschwingkreis angeschlossen oder die Sekundärinduktivität ist von einem Resonanzschwingkreis umfasst, wobei der Resonanzschwingkreis auf die Frequenz des in dem Primärleiter eingeprägten Wechselstroms abgestimmt ist. Somit ist eine wirtschaftliche Leistungsversorgung selbst bei einer großen Streuinduktivität des Primärleiters durchführbar.

Bei einer vorteilhaften Ausgestaltung weist die elektrisch leitfähige Koppelfläche Ausnehmungen oder Einschnitte auf zur Verminderung von Wirbelströmen. Vorzugsweise verlaufen die Ausnehmungen oder Einschnitte parallel oder transversal zu den Leitungsbahnen der Windungen der Sekundärinduktivität. Durch die Ausbildung der Ausnehmungen wird verhindert, dass magnetische Feldlinien, die durch die induktive Kopplung erzeugt werden und die die elektrisch leitfähige Koppelfläche transversal, insbesondere senkrecht, schneiden, großflächig ausgedehnte, kreisförmige Wirbelströme in der elektrischen Koppelfläche oder den elektrischen Koppelflächen anwerfen, die zu Potentialunterschieden innerhalb der einzelnen elektrischen Koppelflächen und damit zu Verzerrungen des kapazitiv übermittelten Datensignals führen.

Bei einer vorteilhaften Ausgestaltung ist die elektrisch leitfähige Koppelfläche aus einem Flachbandkabel gebildet, wobei die Adern des Flachbandkabels untereinander punktuell elektrisch verbunden sind und so eine baumartige Topologie ohne Schleifen bilden. Somit ist ein besonders einfaches Mittel angegeben, dass nicht nur gute Koppeleigenschaften aufweist, sondern auch die Ausbildung von Wirbelströmen wirkungsvoll unterbindet.

Bei einer vorteilhaften Ausgestaltung weist die elektrisch leitfähige Koppelfläche einen Abgriff zum Anschluss an die zweite Datenübertragungseinrichtung auf, wobei die elektrisch leitfähige Koppelfläche symmetrisch bezüglich des Abgriffs ausgebildet ist. Die Länge der elektrisch leitfähigen Koppelfläche, gemessen zwischen den vom Abgriff entfernten Enden, beträgt vorteilhaft wenigstens 5cm oder sogar wenigstens 10cm, jedoch sind auch kürzere Längen verwendbar. Durch die symmetrische, also mittige, Anordnung des Abgriffs werden durch Störeffekte induzierte Potentialunterschiede nochmals reduziert.

Bei einer vorteilhaften Ausgestaltung ist die Anordnung der elektrisch leitfähigen Koppelflächen symmetrisch bezüglich der Verlegerichtung des Primärleiters. Somit sind auf den vorzugsweise paarweise verlegten Primärleiter aufgeprägte Gegentaktsignale besonders gut auskoppelbar und es können solche Datensignale besonders verzerrungsarm eingekoppelt werden.

Bei einer vorteilhaften Ausgestaltung sind die zwei elektrisch leitfähigen Koppelflächen identisch ausgeformt und/oder ist die Sekundärinduktivität symmetrisch bezüglich der Verlegerichtung des Primärleiters ausgebildet. Somit ist der Übertragerkopf mit der Sekundärinduktivität und den elektrisch leitfähigen Koppelflächen in zwei gegeneinander um 180° gedrehten Orientierungen an den Primärleiter ankoppelbar. Insbesondere kann somit ein fahrerloses Transportfahrzeug den Bereich des Primärleiters verlassen und zu einem späteren Zeitpunkt und/oder an andere Stelle mit umgekehrter Fahrtrichtung und Orientierung wieder in den Koppelbereich des Primärleiters eintreten.

Bei einer vorteilhaften Ausgestaltung ist die Sekundärinduktivität der Ausnehmung eines ferromagnetischen Kerns angeordnet zur Erhöhung der Kopplungsstärke und Bündelung der magnetischen Feldlinien im induktiven Koppelbereich.

Bei einer vorteilhaften Ausgestaltung deckt die elektrisch leitfähige Koppelfläche einen Bereich der Ausnehmung des ferromagnetischen Kerns zum Primärleiter hin ab. Somit führt der ferromagnetische Kern die magnetischen Feldlinien um die elektrisch leitfähige Koppelfläche herum, und die magnetischen Feldlinien durchstoßen nicht diese Koppelfläche oder Koppelflächen. Wirbelströme in den Koppelflächen sind daher reduziert.

Bei einer vorteilhaften Ausgestaltung ist die Ausnehmung mit einer Vergussmasse ausgefüllt, wobei die Sekundärinduktivität in die Vergussmasse eingebettet ist und die elektrisch leitfähige Koppelfläche oder die elektrisch leitfähigen Koppelflächen auf eine durch die Vergussmasse gebildete Oberfläche aufgelegt oder in diese in Oberflächennähe eingebettet sind. Somit ist zum einen die wenigstens eine elektrisch leitfähige Koppelfläche sicher gehalten und zum anderen wird mit einfachen Mitteln ein definierter Abstand der Koppelfläche zu den Windungen der Sekundärinduktivität eingestellt.

Bei einer vorteilhaften Ausgestaltung weist der in den Primärleiter eingeprägte Wechselstrom eine zeitlich konstante Amplitude auf. Insbesondere wird durch eine elektrische und/oder elektronische Schaltung diese Amplitude unabhängig von der Entnahme elektrischer Leistung aus dem Primärleiter durch die wenigstens eine bewegliche Einheit konstant gehalten. Vorteilhaft beträgt die zeitlich konstante Amplitude des in den Primärleiter eingeprägten Wechselstroms wenigstens 10A, wodurch Antriebseinheiten in Fertigungsanlagen als bewegliche Einheiten versorgbar sind.

Bei einer vorteilhaften Ausgestaltung beträgt die Frequenz des in den Primärleiter eingeprägten Wechselstroms wenigstens 10 kHz und liegt insbesondere zwischen 10 und 200 kHz, beispielsweise bei 15 kHz, 20 kHz, 25 kHz, 50 kHz, 83 kHz, 151 kHz oder bei einem anderen Wert in dem genannten Bereich oder darüber. Es hat sich herausgestellt, dass bei den genannten Frequenzen eine induktive, resonante Leistungsübertragung über Luftspalte im Zentimeterbereich mit besonders hohem Wirkungsgrad möglich ist.

Besonders günstig ist es daher, wenn der Primärleiter und/oder die Windungen der Sekundärinduktivität aus HF-Litze gefertigt sind, also aus einem Litzenleiter mit gegeneinander isolierten Litzendrähten. Somit ist eine durch den Skineffekt bewirkte Verminderung der effektiven Leiterquerschnittsfläche vermieden, und es sind die benötigten Stromstärken bei den gewünschten Frequenzen mit lediglich geringen ohmschen Verlusten transportierbar. Versuche haben auch gezeigt, dass insbesondere mittelfrequente Wechselströme im unteren Frequenzbereich schon in den geforderten Stromstärken durch gewöhnliche Litzenleiter mit geringen ohmschen Verlusten transportierbar sind, da die Luft zwischen den Litzendrähten schon für eine gewisse Isolation sorgt. Bei höheren Frequenzen und/oder höheren Stromstärken ist jedoch die Stromverdrängung so stark, dass elektrische Kontaktierungen zwischen den Litzendrähten durch die Isolationsschichten einer HF-Litze verhindert werden sollten.

Die Erfindung ist vorteilhaft einsetzbar, wenn die erste Datenübertragungseinheit von einer stationären Einheit, beispielsweise von einem Master eines Bussystems, oder von einer weiteren beweglichen Einheit, beispielsweise einem Slave oder einem weiteren Kommunikationsteilnehmer eines Bussystems, umfasst. Die Erfindung ist vorteilhaft für die Datenkommunikation gemäß einem Busprotokoll, beispielsweise AS-Interface, CAN, CANopen, devicenet, profibus, Ethernet oder einem anderen Busprotokoll, einsetzbar.

Bei einer vorteilhaften Ausgestaltung sind die Windungen der Sekundärinduktivität in nach einer Seite offenen Ausnehmungen eines plattenförmigen Moduls angeordnet, wobei die offene Seite der Ausnehmungen des plattenförmigen Moduls zu dem Primärleiter oder dem Hinleiter und Rückleiter des Primärleiters orientiert ist. Die Ausnehmungen schirmen die Sekundärinduktivität mechanisch ab und sind vorzugsweise mit Elementen aus ferromagnetischem Material gebildet zur Verstärkung der induktiven Kopplung und zum Bündeln und Führen der magnetischen Feldlinien. Somit ist ein kompakter, modular einsetzbarer Übertragerkopf ausgebildet, mit dem beispielsweise Einschienenhängebahnen oder fahrerlose Transportfahrzeuge oder weitere bewegliche Einheiten nachrüstbar sind. Vorteilhaft umfasst dieser Übertragerkopf zusätzlich die elektronischen Mittel zur Bildung des auf das Leistungssignal abgestimmten Resonanzkreises und/oder die Datenübertragungseinrichtung und/oder eine Gleichrichtungsstufe zur Gleichrichtung des übertragenen Leistungssignals und/oder einen Zwischenkreiskondensator zur Pufferung des übertragenen, gleichgerichteten Leistungssignals.

Die Erfindung ist vorteilhaft einsetzbar bei einer Anlage mit induktiv aus einem Primärleiter versorgbaren elektrischen Verbrauchern, bei der mehrere erfindungsgemäße, bewegliche Einheiten vorgesehen sind und bei der zwischen den Einheiten und/oder zwischen jeder Einheit und einer stationären Einheit Daten über den Primärleiter übertragbar sind.

Die erfindungsgemäße Ausgestaltung dieser Anlage sieht vor, dass der Primärleiter in einem Boden verlegt ist, dass jede bewegliche Einheit von einem Fahrzeug umfasst wird, welches auf der Oberfläche des Bodens verfahrbar ist, dass die Sekundärinduktivität und die wenigstens eine elektrisch leitfähige Koppelfläche von einem plattenförmigen Übertragerkopf, vorzugsweise einem Übertragerkopf mit rechteckiger Grundform, umfasst werden und dass der Übertragerkopf am Unterboden oder auf der Unterseite des Fahrzeugs montiert ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

Es zeigt
- Fig. 1: eine Prinzipdarstellung eines Übertragerkopfes zur berührungslosen Energieübertragung in Gebrauchsstellung von vorn,
- Fig. 2: eine Ansicht des Übertragerkopfes aus Fig. 1 von unten,
- Fig. 3: einen Querschnitt durch den Übertragerkopf aus Figur 1,
- Fig. 4: ein Detail aus Fig. 3,
- Fig. 5: den Verlauf der magnetischen Feldlinien bei der induktiven Leistungsübertragung nach Figur 1,
- Fig. 6: einen weiteren Übertragerkopf in Teilansicht eines Querschnitts,
- Fig. 7: ein Blockschaltbild einer Anlage mit mehreren beweglichen Einheiten,
- Fig. 8: eine bewegliche Einheit mit Mitteln zur Datenübertragung nach dem Stand der Technik,
- Fig. 9: eine elektrisch leitfähige Koppelfläche,
- Fig. 10: eine weitere elektrisch leitfähige Koppelfläche und
- Fig. 11: eine dritte elektrisch leitfähige Koppelfläche.

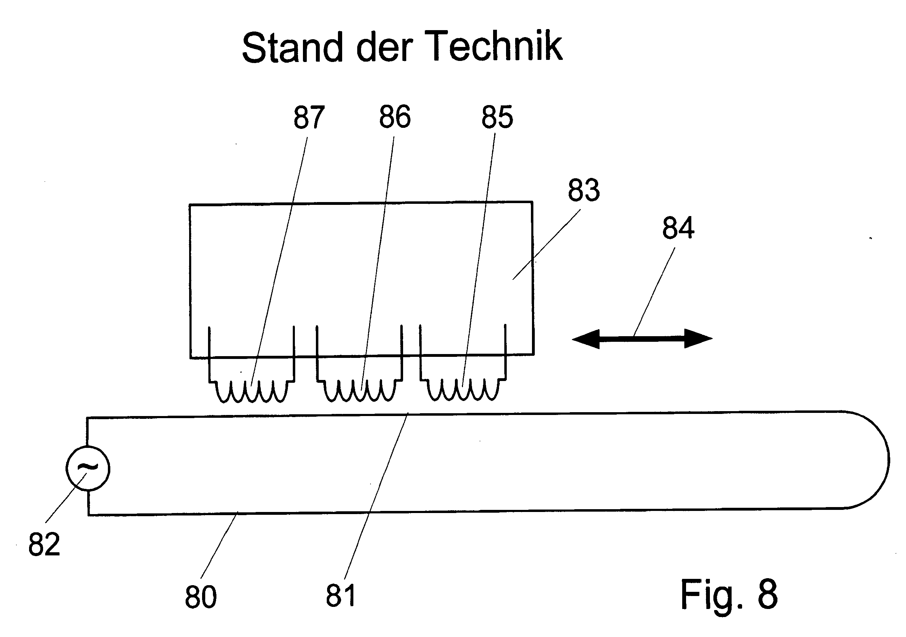

Fig. 8 zeigt die Prinzipskizze einer Anlage mit wenigstens einer beweglichen Einheit, die induktiv aus einem Primärleiter versorgt wird, nach dem beispielsweise in der DE 10 2006 004 700 A1 beschrieben Stand der Technik.

Ein Generator 82 ist an einen, einen Hinleiter 80 und einen Rückleiter 81 umfassenden Primärleiter angeschlossen. Hinleiter 80 und Rückleiter 81 sind an ihren vom Generator 82 entfernten Enden verbunden und bilden somit eine langgestreckte Primärleiterspule oder Primärleiterschleife. Der Generator 82 prägt auf den Primärleiter einen mittelfrequenten Wechselstrom konstanter Amplitude und konstanter Frequenz ein. Beispielsweise wird eine Amplitude von 60A und eine Frequenz von 20kHz bereitgestellt, es sind aber in anderen Anlagen auch hiervon verschiedene Werte üblich.

Im Bereich des Primärleiters ist eine bewegliche Einheit angeordnet, die wenigstens einen ebenfalls beweglichen Verbraucher 83 umfasst. Die bewegliche Einheit ist mit dem beweglichen Verbraucher 83 in Richtung eines Freiheitsgrads 84 beweglich, der, wie durch Pfeile angedeutet, entlang der Längsrichtung der Primärleiters, also der parallel geführten Hinleiter 80 und Rückleiter 81, orientiert ist. Der bewegliche Verbraucher 83 ist mit einer Spule 85 an den Primärleiter induktiv angekoppelt. Primärleiter 80, 81 und Spule 85 formen somit ein induktives Koppelelement. Die dargestellte Kopplung ist lediglich schematisch und umfasst beispielsweise ferner eine ferromagnetische Kernanordnung zur Verstärkung der Kopplung. An die Spule 85 ist in Reihe und/oder parallel eine Kapazität geschaltet zur Bildung eines Resonanzkreises, dessen Resonanzfrequenz oder Resonanzfrequenzbereich auf die Frequenz der durch den Generator 82 eingeprägten Frequenz abgestimmt ist. An den Resonanzkreis ist weiter eine Gleichrichtungsstufe und schließlich, eventuell ergänzt durch einen Energiepuffer in Form eines Kondensators, ein elektrischer Verbraucher, beispielsweise ein elektrischer Antrieb oder ein elektrisches Stellelement oder dergleichen, angeschlossen. Über den Resonanzkreis entnimmt der Verbraucher dem Primärleiter Energie zur eigenen Versorgung, wobei die Übertragungsstrecke der induktiven Kopplung durchaus im Zentimeterbereich, also im Bereich eines oder weniger Zentimeter, liegen kann. Der Generator 82 sorgt dafür, dass unabhängig von der Entnahme die eingeprägte Amplitude im Wesentlichen konstant bleibt.

Soll, wie bei der DE 10 2006 004 700 A1 vorgesehen, über den Primärleiter zusätzlich eine Datenübertragung erfolgen, so sind weitere Spulen 86 und 87 vorgesehen, über die die entsprechenden Datensignale ein- und ausgekoppelt werden können.

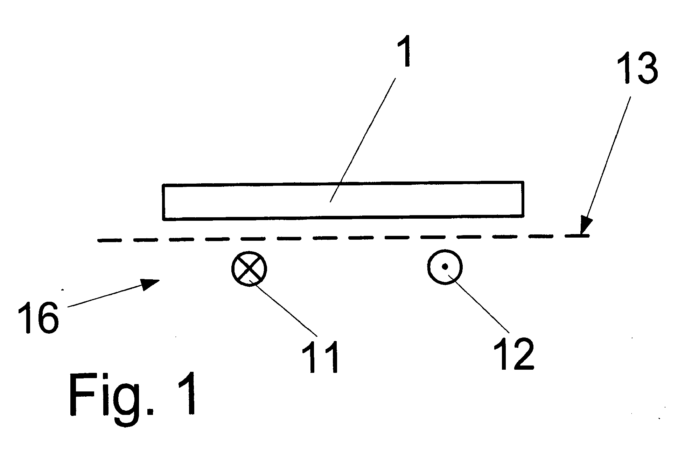

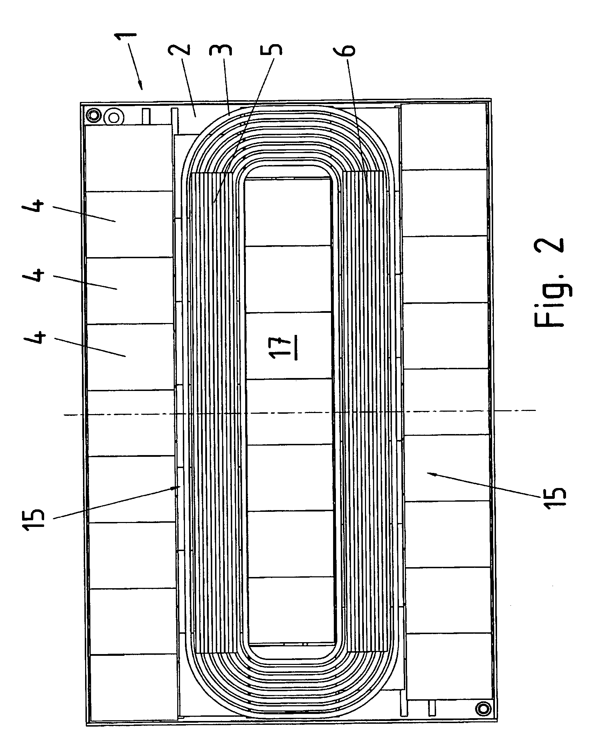

Fig. 1 zeigt eine Prinzipdarstellung eines Übertragerkopfes 1 eines beweglichen Verbrauchers, der eine der Spule 85 in Fig. 8 entsprechende Sekundärinduktivität umfasst. Dieser Übertragerkopf 1 ist flach ausgeführt und in einem Abstand im Zentimeterbereich über dem Fußboden 13 gehalten, in welchem der Hinleiter 11 und der Rückleiter 11 eines Primärleiters 16 verlegt sind. Der Übertragerkopf 1 ist an der Unterseite des Fahrzeugbodens eines nicht gezeigten fahrerlosen Transportsystems montiert, das auf dem Fußboden 13 fährt. Zur Verringerung von störenden Verzerrungen der Datensignale ist bei der Anlage nach Fig. 1 nun im Gegensatz zu der Anlage nach Fig. 8 keine induktive Kopplung für Datensignale vorgesehen, sondern es sind elektrisch leitfähige Koppelflächen für eine kapazitive Übertragung der Datensignale ausgebildet, wie in Fig. 2 gezeigt.

Fig. 2 zeigt den plattenförmig ausgeformten Übertragerkopf 1 aus Fig. 1 von unten, also vom Fußboden 13 aus gesehen. Die Bodenplatte 2 des Übertragerkopfes 1 ist mit ferromagnetischen Abschirmplatten 4 bestückt, auf denen oval geführte Windungen des Sekundärleiters 3 eine Sekundärinduktivität bilden. Die oval geführten Windungen weisen eine lange Seite, entlang der die Windungen in Bereichen 15 gerade geführt sind, und eine kurze Seite, entlang der die Windungen näherungsweise halbkreisförmig geführt sind, auf. Die Windungen liegen insgesamt in einer Ebene, die parallel zu dem Fußboden 13 in Figur 1 verläuft. Die insgesamt oval geformte aus dem Sekundärleiter 3 gebildete Sekundärinduktivität berandet eine Durchtrittsfläche 17 für magnetische Feldlinien, die ungefähr mit der wirksamen Fläche der Sekundärinduktität übereinstimmt. Die wirksame Fläche der durch die Primärleiterschleife gebildeten Induktivität ist somit um ein Vielfaches größer als die wirksame Fläche der Sekundärinduktivität und auch als die effektive Fläche der Sekundärinduktivität, die sich aus dem Produkt von wirksamer Fläche mit Windungszahl ergibt. Die geraden Bereich 15 sind in Gebrauchsstellung des fahrerlosen Transportsfahrzeugs und damit des Übertragerkopfes 1 in Deckung gebracht mit dem Hinleiter 11 beziehungsweise Rückleiter 12 des Primärleiters 16. Die gerade geführten Abschnitte 15 der Windungen des Sekundärleiters werden durch jeweils eine rechteckig geformte elektrisch leitfähige Koppelfläche 5 und 6 abgedeckt, wobei die seitliche Abmessung der Koppelflächen 5 und 6, also die Abmessung quer zur Stomrichtung im Sekundärleiter 3 im Bereich der Abdeckung, jeweils durch die Gesamtbreite der Windungen der Sekundärinduktivität begrenzt wird.

Die Sekundärinduktivität ist im Ausführungsbeispiel ungefähr 40cm lang und 20cm breit, es sind jedoch in anderen Ausführungsbeispielen davon abweichende Abmessungen und/oder geometrische Formen, beispielsweise eine kreisrunde Führung der Windungsschleifen, realisierbar.

Die Koppelflächen 5, 6 sind im Ausführungsbeispiel jeweils rechteckig ausgeführt und ungefähr 30cm lang und 3cm breit. Aber auch andere Breiten, beispielsweise zwischen 3cm und 5cm oder unterhalb von 3cm oder oberhalb von 5cm, und/oder andere Längen, beispielsweise zwischen 10cm und 20cm oder unterhalb 10cm oder oberhalb 20cm oder 30cm, sind in Ausführungsbeispielen der Erfindung realisierbar.

Die Windungen der Sekundärinduktivität sind aus einem Litzenleiter oder aus HF-Litze ausgeführt, wobei sich HF-Litze von einem gewöhnlichen Litzenleiter dadurch unterscheidet, dass die einzelnen Litzendrähte zusätzlich gegeneinander isoliert sind. Somit sind die Leitungen der Sekundärinduktivität zur Durchleitung von mittelfrequentem Wechselstrom mit hoher Stromstärke ausgebildet, und eine übermäßige Verringerung des nutzbaren Leiterquerschnitts aufgrund des Skineffekts wird vermieden.

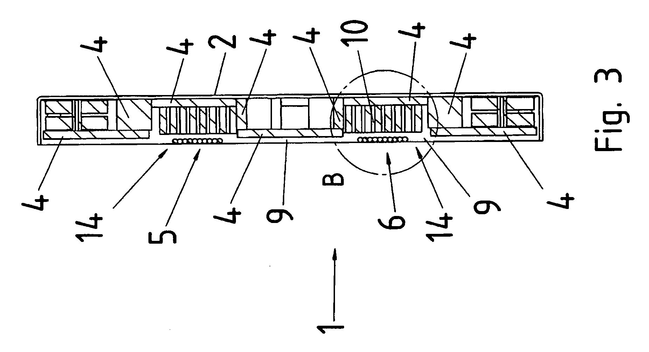

Fig. 3 zeigt einen Querschnitt durch den Übertragerkopf 1 aus Fig. 2 entlang der strichpunktierten Linie. Die auf der Bodenplatte 2 montierten ferromagnetischen Abschirmplatten 4 formen eine parallel zur Bodenplatte 2 verlaufende, nutförmige Ausnehmung 14, in die der Sekundärleiter 3 in einer oval geführten Spirale zur Bildung der Sekundärinduktivität eingelegt ist. Die Sekundärinduktivität der beweglichen Einheit wird somit durch den als Flachband aufgewickelten Sekundärleiter 3 gebildet, wobei die einzelnen Wicklungen durch eine Isolation 10 elektrisch getrennt sind. Mehrere, im Beispiel sechs und in weitere Beispielen weniger als sechs oder mehr als sechs, beispielsweise acht oder elf oder mehr, Einzelwindungen der Sekundärinduktivität verlaufen also abschnittsweise unter den durch die Koppelfläche 6 zum Primärleiter hin abgedeckten Bereich. Die Ausnehmung 14 und die zum Fußboden 13 weisende Seite des Übertragerkopfes 1 sind mit einer erhärteten Vergussmasse 9 ausgegossen. In die so gebildete, zum Fußboden 13 weisende ebene und glatte Oberfläche der Vergussmasse 9 sind über den Windungen des Sekundärleiters 3 zwei elektrisch leitfähige Koppelflächen 5 und 6 eingelegt, wobei die Außenseite dieser Koppelflächen 5, 6 die ebene, glatte Oberfläche der Vergussmasse 9 fortsetzt. Diese Koppelflächen 5, 6 sind somit in Gebrauchsstellung des Übertragerkopfes 1 zwischen der Sekundärinduktivität und dem Primärleiter 16 und sogar zwischen jeweils einem geraden Bereich 15 der Windungen des Sekundärleiters 3 und jeweils dem Hinleiter 11 beziehungsweise dem Rückleiter 12 angeordnet.

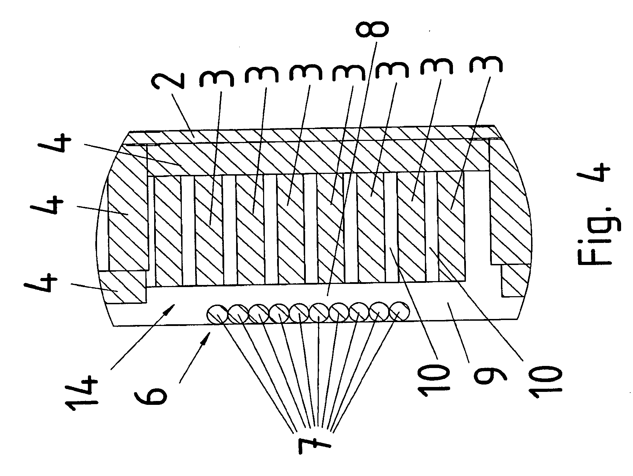

Fig. 4 zeigt eine Detailansicht des Querschnitts aus Fig. 3, in der der in die von den Abschirmplatten 4 gebildete Ausnehmung 14 gelegte Sekundärleiter 3 ersichtlich ist. Die in die Vergussmasse 9 eingelegte elektrisch leitfähige Koppelfläche 6 ist als mehradriges Flachbandkabel ausgeführt, dessen Adern 7 gegeneinander elektrisch isoliert sind und parallel zu dem geraden Bereich 15 verlaufen. Zwischen der elektrisch leitfähigen Koppelfläche 6 und den Windungen des Sekundärleiters 3 wird ein mit Vergussmasse 9 gefüllter Spalt 8 eingehalten. Die einzelnen Windungen des Sekundärleiters 3 sind jeweils durch eine Isolation quer zur bevorzugten Stromrichtung elektrisch getrennt, die auch zumindest teilweise von der Vergussmasse 9 gebildet werden kann. Die elektrisch leitfähige Koppelfläche 5 ist identisch ausgebildet und angeordnet.

Im Ausführungsbeispiel beträgt die Breite des Spalts 8, also der kürzeste Abstand zwischen der elektrisch leitfähigen Koppelfläche 6 und den HF-Litzenleitern des Sekundärleiters 3, ungefähr 3mm. In weiteren Ausführungsbeispielen sind auch Spaltbreiten von mehr als 3mm, beispielsweise zwischen 3mm und 5mm oder mehr als 5mm, oder weniger als 3mm realisierbar, insbesondere durch Aufdampfen, Laminieren, Beschichten und/oder Aufkleben der Koppelflächen 5 und/oder 6 auf die jeweiligen Oberflächenbereiche des Sekundärleiters 3.

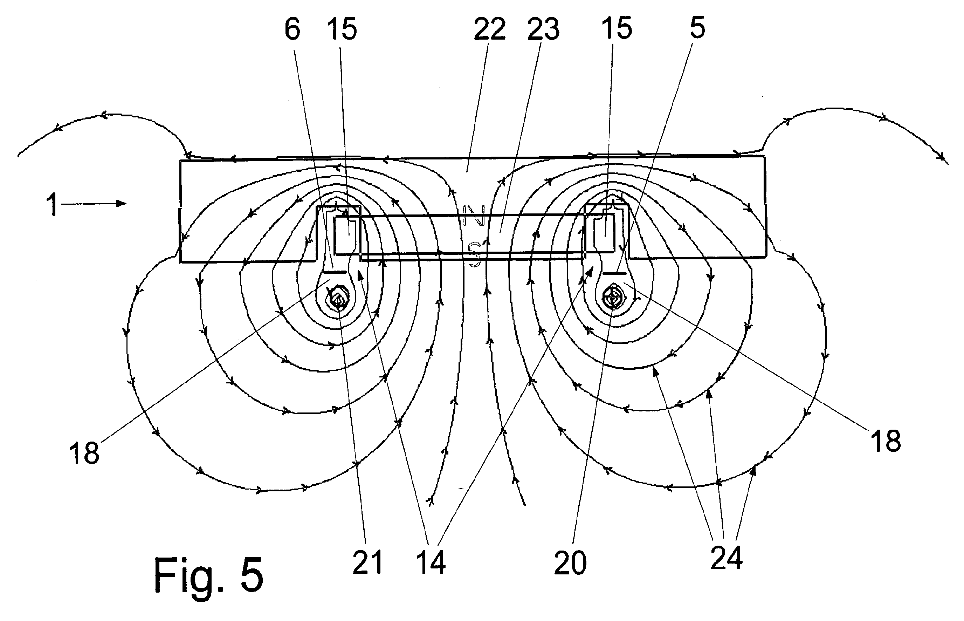

Fig. 5 zeigt schematisch den berechneten Verlauf der magnetischen Feldlinien 24 bei dem in Fig. 2 gezeigten Übertragerkopf 1, wie er sich durch die induktive Ankopplung und während der Energieübertragung ergibt. Die Abschirmplatten 4 formen einen schematisch gezeigten, ungefähr E-förmigen ferromagnetischen Kern 22, in dessen im Beispiel nutförmig oval umlaufende Ausnehmung 14 die passend oder entsprechend oval geformte Sekundärinduktivität 23 eingelegt ist. In anderen Ausführungsbeispielen sind die Ausnehmungen 14 lediglich gerade Abschnitte, und die halbkreisförmigen Kehrschleifen der Windungen der Sekundärinduktivität stehen über die seitlichen Begrenzungen der Bodenplatte des Übertragerkopfes in Verlaufsrichtung der Primärleiter seitlich über. Durch den in Hinleiter 20 und Rückleiter 21 eingeprägten mittelfrequenten Wechselstrom werden magnetische Feldlinien 24 generiert, die durch den ferromagnetischen Kern 22 gebündelt und um die geraden Bereiche 15 der Sekundärinduktivität 23 als geschlossene Linien geführt werden, wobei die Pfeile der magnetischen Feldlinien 24 vom Südpol zum Nordpol verlaufen. Aus der Darstellung ist ersichtlich, dass die magnetischen Feldlinien 24 durch die von der Sekundärinduktivität 22 berandeten Fläche 17 treten, während zwei Bereiche 18 auf den Verbindungslinien jeweils eines geraden Bereichs 15 der Windungen der Sekundärinduktivität 23 mit dem Hinleiter 20 beziehungsweise dem Rückleiter 21 im Wesentlichen frei von magnetischen Feldlinien 2 bleibt. In diesen Bereichen 18 sind nun die elektrisch leitfähigen Koppelflächen 5, 6 angeordnet, so dass die elektrisch leitfähige Koppelfläche 5 mit dem überdeckten Abschnitt des Hinleiters 20 sowie die elektrisch leitfähige Koppelfläche 6 mit dem überdeckten Abschnitt des Rückleiters 21 jeweils ein kapazitives Koppelelement bilden. An die Koppelflächen 5, 6 ist jeweils ein Ein- und/oder Ausgang einer nicht dargestellten Datenübertragungseinrichtung angeschlossen. Somit sind zwischen Hinleiter 20 und Rückleiter 21 Gegentakt-Spannungssignale schaltbar, die von den kapazitiven Koppelelementen an die Datenübertragungseinrichtung übermittelt werden.

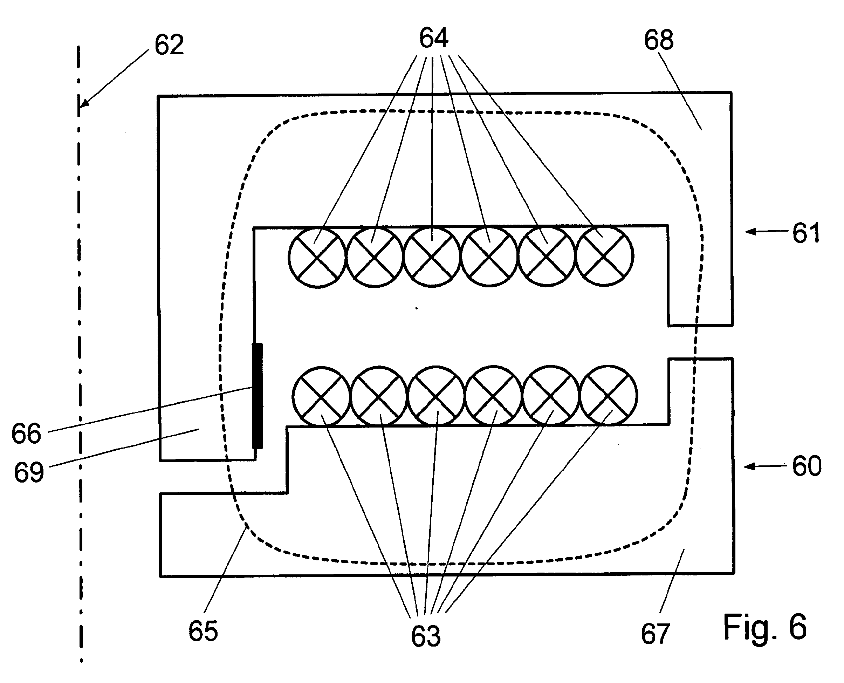

Fig. 6 zeigt eine schematisierte Schnittansicht durch eine Hälfte eines weiteren erfindungsgemäßen Ausführungsbeispiels eines Übertragerkopfes. Dieser Übertragerkopf umfasst ein ringförmig ausgebildetes Primärteil 60 und ein passend ringförmig ausgebildetes Sekundärteil 61, die gegeneinander um eine Drehachse 62 drehbar sind. Das Primärteil 60 und das Sekundärteil 61 umfassen jeweils ferromagnetische Kernelemente 67 und 68, die Ausnehmungen bilden, in denen eine kreisförmig geführte, den Primärleiter bildende Primärwicklung 63 und eine hierzu passende, kreisförmig geführte, die Sekundärinduktivität bildende Sekundärwicklung 64 angeordnet sind. Durch die Form der Kernelemente 67 und 68 werden die magnetischen Feldlinien 65 des durch den Stromfluss im Primärleiter generierten magnetischen Feldes im Wesentlichen innerhalb der Kernelemente 67 und 68 geführt. An der radial äußeren, also dem durch die Kernelemente 67 und 68 umschlossenen, ringförmigen Bereich zugewandten Seite ist eine ringförmige oder zylindrische elektrisch leitfähige Koppelfläche 66 ausgebildet, die mit der Primärwicklung 63 ein kapazitives Koppelelement zur Übertragung von Datensignalen bildet. Wie aus der beispielhaft eingezeichneten magnetischen Feldlinie 65 ersichtlich ist, ist die magnetisch Feldstärke im Bereich der Koppelfläche 66 klein und die magnetischen Feldlinien verlaufen tangential zur Koppelfläche 66. Somit werden praktisch keine Wirbelströme in der Koppelfläche 66 induziert.

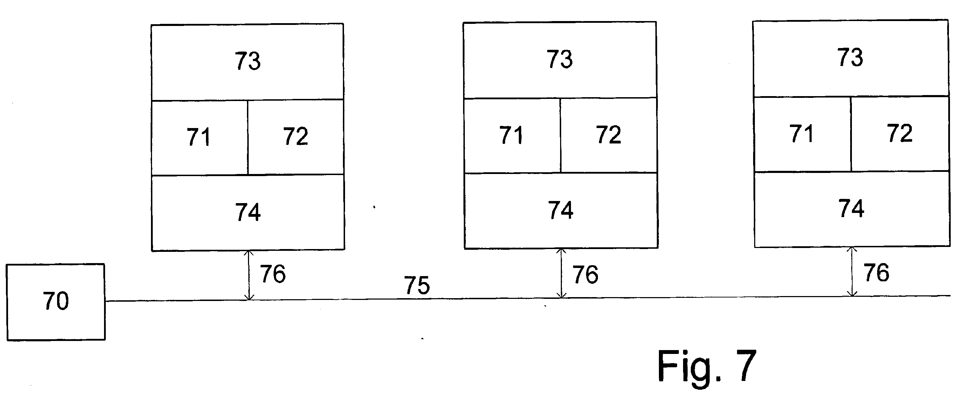

Fig. 7 zeigt das Blockschaltbild einer Anlage mit mehreren beweglichen Einheiten. Jede Einheit umfasst einen Übertragerkopf 74 gemäß der beschriebenen Ausführungsbeispiele, an dessen kapazitives Koppelelement eine Transceivereinheit 71 angeschlossen ist und an dessen induktives Koppelelement ein AC-DC-Wandler 72 angeschlossen ist, der einen Verbraucher 73 mit elektrischer Energie versorgt. Die Transceivereinheit 71 ist Teil einer Datenübertragungseinrichtung der beweglichen Einheit. Die beweglichen Einheiten sind über das kapazitive Koppelelement und das induktive Koppelelement umfassende Kopplungen 76 an den Primärleiter 75 gekoppelt, der aus einem Generator 70 gespeist wird. Jede bewegliche Einheit ist für sich relative zum Primärleiter beweglich. Der Generator 70 umfasst auch eine Datenübertragungseinrichtung zum Senden und Empfangen von Datensignalen auf den beziehungsweise von dem Primärleiter 75.

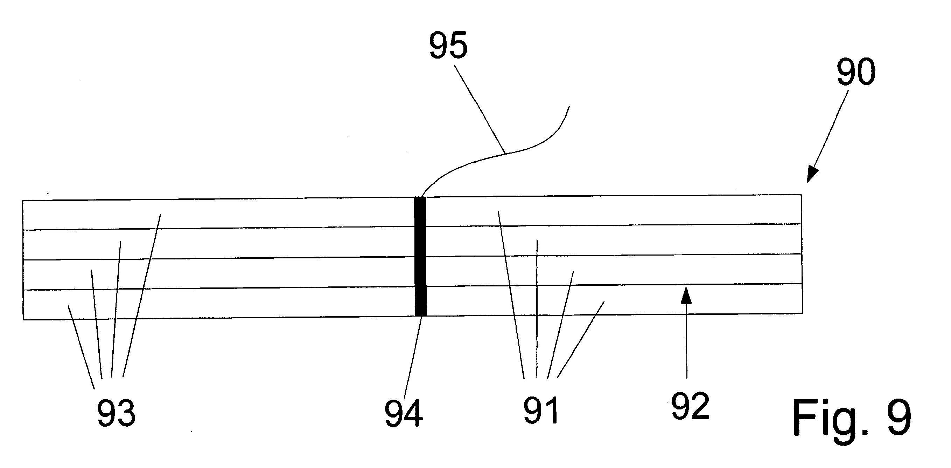

Fig. 9 zeigt beispielhaft eine elektrisch leitfähige Koppelfläche 90, wie sie bei den beschriebenen Übertragerköpfen einsetzbar ist und die aus einem rechteckigen Stück Kupferblech gebildet ist, wobei Ausnehmungen in Form von Schlitzen 92 eingebracht sind, die das Kupferblech in Streifen 91 unterteilen. Diese Streifen 91 sind durch einen Mittenabgriff 94 untereinander elektrisch leitend verbunden, aber durch die Schlitze 92 in den anderen Bereichen elektrisch getrennt. An dem Mittenabgriff 94 ist die Anschlussleitung 95 einer Datenübertragungseinrichtung angeschlossen, und beidseits des Mittenabgriffs 94 erstrecken sich symmetrisch zwei die Koppelfläche 90 bildende Flügel. Durch die baumartige Topologie, also den schleifenlose Verlauf der Verzweigungen, der Koppelflächen 90 werden geschlossene Leiterschleifen, in denen Wirbelströme fließen können, konsequent vermieden.

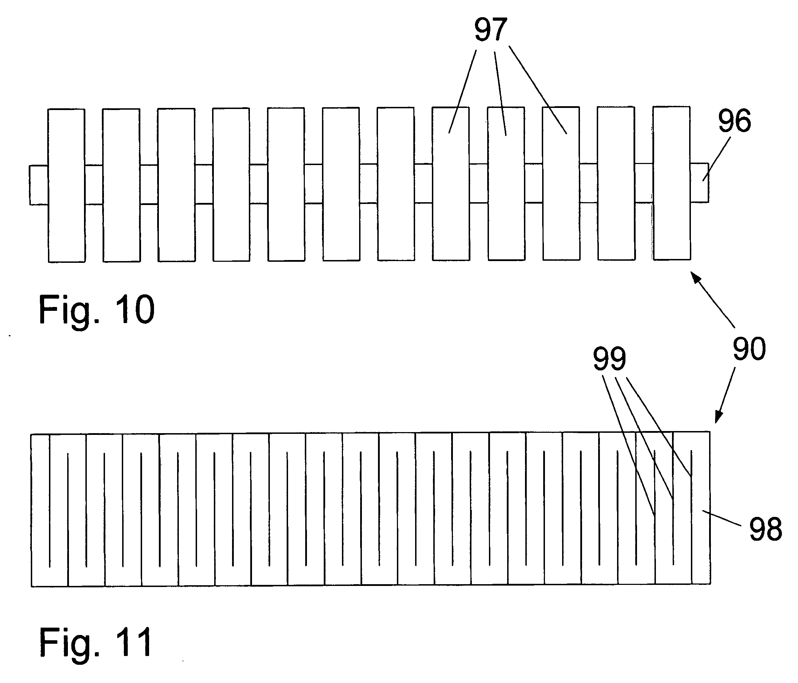

Fig. 10 zeigt ein weiteres Ausführungsbeispiel einer elektrisch leitfähigen Koppelfläche 90, bei der ein Längsstreifen 96 aus Kupfer quer ausgerichtete Querstreifen 97 aus Kupfer trägt. Durch die Lücken zwischen den Querstreifen 97 werden Wirbelströme unterdrückt. Die Koppelfläche 90 wird vorzugsweise in der Mitte des Längsstreifens 96 an einen Ausgang einer Datenübertragungseinrichtung angeschlossen. Zu Bildung einer ringförmigen oder zylindrischen Koppelfläche 66 werden die Enden des Längsstreifens 96 zusammengeführt, wobei die Flächennormale des Längsstreifens 96 radial verläuft.

Fig. 11 zeigt ein weiteres Ausführungsbeispiel einer elektrisch leitfähigen Koppelfläche 90 , bei der in einen Kupferstreifen wechselseitig Schlitze 99 eingebracht sind, so dass sich insgesamt ein mäanderförmiger Verlauf der Leiterbahn 98 ergibt. Die Schlitze 99 vermindern ebenfalls Wirbelströme. Zu Bildung einer ringförmigen oder zylindrischen Koppelfläche 66 kann diese Koppelfläche ebenfalls an ihren Enden zusammengeführt werden.

### Bezugszeichenliste

- 1: Übertragerkopf
- 2: Bodenplatte
- 3: Sekundärleiter
- 4: Abschirmplatte
- 5: Koppelfläche
- 6: Koppelfläche
- 7: Ader
- 8: Spalt
- 9: Vergussmasse
- 10: Isolation
- 11: Hinleiter
- 12: Rückleiter
- 13: Fußboden
- 14: Ausnehmung
- 15: gerader Bereich
- 16: Primärleiter
- 17: Durchtritsfläche
- 18: Bereich
- 20: Hinleiter
- 21: Rückleiter
- 22: Kern
- 23: Sekundärinduktivität
- 24: Feldlinie
- 60: Primärteil
- 61: Sekundärteil
- 62: Drehachse
- 63: Primärwicklung
- 64: Sekundärwicklung
- 65: Feldlinie
- 66: Koppelfläche
- 67, 68: Kernelement
- 69: Vorsprung
- 70: Generator
- 71: Transceivereinheit
- 72: AC-DC-Wandler
- 73: Verbraucher
- 74: Übertragerkopf
- 75: Primärleiter
- 76: Kopplung
- 80: Hinleiter
- 81: Rückleiter
- 82: Generator
- 83: beweglicher Verbraucher
- 84: Freiheitsgrad
- 85: Spule
- 86: Spule
- 87: Spule
- 90: Koppelfläche
- 91: Streifen
- 92: Schlitz
- 93: Streifen
- 94: Mittenabgriff
- 95: Anschlussleitung
- 96: Längsstreifen
- 97: Querstreifen
- 98: Leiterbahn
- 99: Schlitz

## Patentansprüche

1. Vorrichtung zur berührungslosen Energieübertragung,
umfassend einen Primärleiter
und eine relativ zum Primärleiter (11, 12, 16, 63,75, 80, 81) bewegliche Einheit (1, 83) mit einer Sekundärinduktivität (3, 23, 64, 85),
wobei Primärleiter (11, 12, 16, 63, 75, 80, 81) und Sekundärinduktivität (3, 23, 64, 85) induktiv gekoppelt sind
und an die Sekundärinduktivität (3, 23, 64, 85) wenigstens ein elektrischer Verbraucher (73, 83) angeschlossen und über die Sekundärinduktivität (3, 23, 64, 85) aus dem Primärleiter (11, 12, 16, 63, 75, 80, 81) mit elektrischer Energie versorgt ist,
wobei in den Primärleiter ein Wechselstrom konstanter Frequenz eingeprägt ist,
und
an die Sekundärinduktivität ein Resonanzschwingkreis angeschlossen ist oder die Sekundärinduktivität von einem Resonanzschwingkreis umfasst ist,
wobei der Resonanzschwingkreis auf die Frequenz des in dem Primärleiter eingeprägten Wechselstroms abgestimmt ist,
**dadurch gekennzeichnet, dass**
an den Primärleiter (11, 12, 16, 63, 75, 80, 81) eine erste Datenübertragungseinrichtung (70) angeschlossen oder angekoppelt ist,
dass an der beweglichen Einheit (1, 83) eine elektrisch leitfähige Koppelfläche (5, 6, 66, 90) ausgebildet ist,
dass die elektrisch leitfähige Koppelfläche (5, 6, 66, 90) mit dem Primärleiter (11, 12, 16, 63, 75, 80, 81) ein kapazitives Koppelelement bildet,
dass an der beweglichen Einheit eine zweite Datenübertragungseinrichtung (71) vorgesehen ist, die an die elektrisch leitfähige Koppelfläche angeschlossen ist
und dass zwischen der ersten Datenübertragungseinrichtung (70) und der zweiten Datenübertragungseinrichtung (70) über den Primärleiter (11, 12, 16, 63, 75, 80, 81) Daten übertragbar sind,
wobei der Primärleiter in einem Boden verlegt ist,
dass die bewegliche Einheit von einem Fahrzeug umfasst wird, welches auf der Oberfläche des Bodens verfahrbar ist,
wobei die Sekundärinduktivität und die elektrisch leitfähige Koppelfläche von einem plattenförmigen Übertragerkopf, vorzugsweise einem Übertragerkopf mit rechteckiger Grundform, umfasst werden
und der Übertragerkopf am Unterboden oder auf der Unterseite des Fahrzeugs montiert ist.

2. Vorrichtung nach Anspruch 1,
**dadurch gekennzeichnet, dass**
der Primärleiter als langgestreckte Leiterschleife ausgeführt ist und einen Hinleiter und einen Rückleiter aufweist
und dass die von dem Primärleiter überdeckte Fläche ein Vielfaches der von der Sekundärinduktivität überdeckten Fläche beträgt,
und/oder dass
die bewegliche Einheit entlang des Primärleiters verschiebbar ist,
und/oder dass
der Primärleiter eine Spule mit kreisförmigen oder gebogen geführten Windungen formt, dass die Sekundärinduktivität eine Spule mit kreisförmigen oder gebogen geführten Windungen umfasst,
dass die Spule des Primärleiters und die Spule der Sekundärinduktivität konzentrisch angeordnet sind
und dass die elektrisch leitfähige Koppelfläche und die Spule der Sekundärinduktivität konzentrisch angeordnet sind,
oder dass
die bewegliche Einheit relativ zu der Spule des Primärleiters um eine Achse drehbar ist.

3. Vorrichtung nach einem der vorangegangenen Ansprüche,
**dadurch gekennzeichnet, dass**
die bewegliche Einheit zwei elektrisch leitfähige Koppelflächen aufweist,
dass eine elektrisch leitfähige Koppelfläche mit dem Hinleiter ein kapazitives Koppelelement bildet,
dass die andere elektrisch leitfähige Koppelfläche mit dem Rückleiter ein kapazitives Koppelelement bildet
und dass die Ausgänge der zweiten Datenübertragungseinrichtung an beide elektrisch leitfähige Koppelflächen angeschlossen sind zur Aus- und/oder Einkopplung von Gegentaktsignalen von dem/auf den Primärleiter.

4. Vorrichtung nach einem der vorangegangenen Ansprüche,
**dadurch gekennzeichnet, dass**
die elektrische Koppelfläche oder die elektrischen Koppelflächen in Bereichen um den Primärleiter angeordnet und/oder ausgerichtet sind, in denen die durch die induktive Kopplung der Sekundärinduktivität an den Primärleiter erzeugte magnetische Feldstärke im Wesentlichen verschwindet und/oder tangential zu der elektrisch leitfähigen Koppelfläche oder den elektrisch leitfähigen Koppelflächen ist.

5. Vorrichtung nach einem der vorangegangenen Ansprüche,
**dadurch gekennzeichnet, dass**
die Sekundärinduktivität eine Spule umfasst
und dass die Windungen der Spule in einer Ebene angeordnet sind.

6. Vorrichtung nach einem der vorangegangenen Ansprüche,
**dadurch gekennzeichnet, dass**
die elektrisch leitfähige Koppelfläche oder die elektrisch leitfähigen Koppelflächen parallel zu der durch Windungen der Spule beschriebenen Ebene ausgerichtet ist/sind,
und/oder dass
die Sekundärinduktivität eine Spule umfasst, deren Windungen eine ovale Form aufweisen, und/oder dass
die ovale Form zwei gerade, parallel verlaufende Bereiche aufweistund dass die parallel verlaufenden Bereiche parallel zu der Verlaufsrichtung des Primärleiters ausgerichtet sind.

7. Vorrichtung nach einem der vorangegangenen Ansprüche,
**dadurch gekennzeichnet, dass**
die elektrisch leitfähige Koppelfläche oder die elektrisch leitfähigen Koppelflächen zwischen der Sekundärinduktivität und dem Primärleiter angeordnet ist/sind.

8. Vorrichtung nach einem der vorangegangenen Ansprüche,
**dadurch gekennzeichnet, dass**
die oder jede elektrisch leitfähige Koppelfläche einen Abschnitt der Windungen der Sekundärinduktivität auf der dem Primärleiter zugewandten Seite abdecken.

9. Vorrichtung nach einem der vorangegangenen Ansprüche,
**dadurch gekennzeichnet, dass**
die Abmessung der oder jeder elektrisch leitfähigen Koppelfläche quer zur Richtung des Stromflusses in der Sekundärinduktivität in dem jeweils durch die elektrisch leitfähige Koppelfläche oder die elektrisch leitfähigen Koppelflächen abgedeckten Bereich der Windungen der Sekundärinduktivität durch die Abmessung des abgedeckten Bereichs der Windungen der Sekundärinduktivität quer zur Richtung des Stromflusses in der Sekundärinduktivität in dem jeweils durch die elektrisch leitfähige Koppelfläche oder die elektrisch leitfähigen Koppelflächen abgedeckten Bereich der Windungen der Sekundärinduktivität begrenzt ist oder dieser gleicht.

10. Vorrichtung nach einem der vorangegangenen Ansprüche,
**dadurch gekennzeichnet, dass**
die elektrisch leitfähige Koppelfläche oder die elektrisch leitfähigen Koppelflächen über den geraden, parallel verlaufenden Bereichen der ovalen Form der Sekundärinduktivität angeordnet ist/sind.

11. Vorrichtung nach einem der vorangegangenen Ansprüche,
**dadurch gekennzeichnet, dass**
die elektrisch leitfähige Koppelfläche Ausnehmungen oder Einschnitte aufweist zur Verminderung von Wirbelströmen,
und/oder dass
die Ausnehmungen oder Einschnitte parallel zu den Leitungsbahnen der Windungen der Sekundärinduktivität verlaufen,
und/oder dass
die elektrisch leitfähige Koppelfläche aus einem Flachbandkabel gebildet ist und dass die Adern des Flachbandkabels elektrisch verbunden sind,
und/oder dass
die elektrisch leitfähige Koppelfläche einen Abgriff zum Anschluss an die zweite Datenübertragungseinrichtung aufweist
und dass die elektrisch leitfähige Koppelfläche symmetrisch bezüglich des Abgriffs ausgebildet ist,
und/oder dass
die Anordnung der elektrisch leitfähigen Koppelflächen symmetrisch bezüglich der Verlegerichtung des Primärleiters ist,
und/oder dass
die zwei elektrisch leitfähigen Koppelflächen identisch ausgeformt sind,
und/oder dass
die Sekundärinduktivität symmetrisch bezüglich der Verlegerichtung des Primärleiters ausgebildet ist,
und/oder dass
die Sekundärinduktivität der Ausnehmung eines ferromagnetischen Kerns angeordnet ist, und/oder dass
die elektrisch leitfähige Koppelfläche einen Bereich der Ausnehmung des ferromagnetischen Kerns zum Primärleiter hin abdeckt.

12. Vorrichtung nach einem der vorangegangenen Ansprüche,
**dadurch gekennzeichnet, dass**
die Ausnehmung mit einer Vergussmasse ausgefüllt ist,
dass die Sekundärinduktivität in die Vergussmasse eingebettet ist
und dass die elektrisch leitfähige Koppelfläche oder die elektrisch leitfähigen Koppelflächen auf eine durch die Vergussmasse gebildete Oberfläche aufgelegt sind,
und/oder dass
der in den Primärleiter eingeprägte Wechselstrom eine zeitlich konstante Amplitude aufweist, und/oder dass
die zeitlich konstante Amplitude des in den Primärleiter eingeprägten Wechselstroms wenigstens 10A beträgt.

13. Vorrichtung nach einem der vorangegangenen Ansprüche,
**dadurch gekennzeichnet, dass**
die Frequenz des in den Primärleiter eingeprägten Wechselstroms wenigstens 10 kHz beträgt, insbesondere zwischen 10 und 200 kHz liegt,
und/oder dass
die erste Datenübertragungseinheit von einer stationären Einheit umfasst wird,
und/oder dass
die erste Datenübertragungseinheit von einer weiteren beweglichen Einheit umfasst wird, und/oder dass
die Windungen der Sekundärinduktivität in nach einer Seite offenen Ausnehmungen eines plattenförmigen Moduls angeordnet sind
und dass die offene Seite der Ausnehmungen des plattenförmigen Moduls zu dem Primärleiter oder dem Hinleiter und Rückleiter des Primärleiters orientiert ist,
und/oder dass
die Windungen der Sekundärinduktivität aus HF-Litze ausgeführt sind,
und/oder dass
der Primärleiter aus HF-Litze ausgeführt ist,
und/oder dass
die wenigstens eine elektrisch leitfähige Koppelfläche auf Oberflächenbereiche der beweglichen Einheit und/oder der Windungen der Sekundärinduktivität aufgebracht, insbesondere aufgeklebt und/oder laminiert und/oder aufgedampft und/oder durch einen Beschichtungsvorgang aufgetragen, ist.

14. Anlage mit elektrischen Verbrauchern, die induktiv aus einem Primärleiter versorgbar sind,
**dadurch gekennzeichnet, dass**
eine Vorrichtung nach einem der vorangegangenen Ansprüche mit einem Primärleiter und mehreren beweglichen Einheiten mit je einer Sekundärinduktivität vorgesehen ist
und dass zwischen den Einheiten und/oder zwischen jeder Einheit und einer stationären Einheit Daten über den Primärleiter übertragbar sind,
wobei der Primärleiter in einem Boden verlegt ist,
dass jede bewegliche Einheit von einem Fahrzeug umfasst wird, welches auf der Oberfläche des Bodens verfahrbar ist,
wobei die Sekundärinduktivität und die elektrisch leitfähige Koppelfläche von einem plattenförmigen Übertragerkopf, vorzugsweise einem Übertragerkopf mit rechteckiger Grundform, umfasst werden
und der Übertragerkopf am Unterboden oder auf der Unterseite des Fahrzeugs montiert ist.

## Claims

1. Device for non-contact energy transmission,
comprising a primary conductor
and a unit (1, 83) movable relative to the primary conductor (11, 12, 16, 63, 75, 80, 81) and having a secondary inductor (3, 23, 64, 85),
wherein primary conductor (11, 12, 16, 63, 75, 80, 81) and secondary inductor (3, 23, 64, 85) are inductively coupled and at least one electric load (73, 83) is connected to the secondary inductor (3, 23, 64, 85) and supplied with electric energy from the primary conductor (11, 12, 16, 63, 75, 80, 81) via the secondary inductor (3, 23, 64, 85),
wherein an alternating current of constant frequency is applied to the primary conductor,
and
a resonant oscillating circuit is connected to the secondary inductor or the secondary inductor is comprised by a resonant oscillating circuit,
wherein the resonant oscillating circuit is tuned to the frequency of the alternating current applied to the primary conductor,
**characterised in that**
a first data transmission apparatus (70) is connected or coupled to the primary conductor (11, 12, 16, 63, 75, 80, 81), **in that** an electrically conductive coupling area (5, 6, 66, 90) is formed on the movable unit (1, 83), **in that** the electrically conductive coupling area (5, 6, 66, 90) forms with the primary conductor (11, 12, 16, 63, 75, 80, 81) a capacitive coupling element,
**in that** a second data transmission apparatus (71) which is connected to the electrically conductive coupling area is provided on the movable unit
and **in that** data is transmissible between the first data transmission apparatus (70) and the second data transmission apparatus (70) via the primary conductor (11, 12, 16, 63, 75, 80, 81),
wherein the primary conductor is laid in a floor,
**in that** the movable unit is comprised by a vehicle which is able to travel on the surface of the floor,
wherein the secondary inductor and the electrically conductive coupling area are comprised by a plate-shaped pick-up, preferably a pick-up of rectangular basic shape and the pick-up is mounted on the underfloor or on the underside of the vehicle.

2. Device according to Claim 1,
**characterised in that**
the primary conductor is designed as an elongated conductor loop and has a forward conductor and a return conductor and **in that** the area covered by the primary conductor is a multiple of the area covered by the secondary inductor, and/or **in that**
the movable unit is displaceable along the primary conductor, and/or **in that**
the primary conductor forms a coil with circular or curvedly-guided turns,
**in that** the secondary inductor comprises a coil with circular or curvedly-guided turns,
**in that** the coil of the primary conductor and the coil of the secondary conductor are concentrically arranged and **in that** the electrically conductive coupling area and the coil of the secondary inductor are concentrically arranged,
or **in that**
the movable unit is rotatable relative to the coil of the primary conductor about an axis.

3. Device according to one of the preceding claims,
**characterised in that**
the movable unit has two electrically conductive coupling areas,
**in that** one electrically conductive coupling area forms with the forward conductor a capacitive coupling element,
**in that** the other electrically conductive coupling area forms with the return conductor a capacitive coupling element and **in that** the outputs of the second data transmission apparatus are connected to both electrically conductive coupling areas for decoupling and/or coupling of push-pull signals from/to the primary conductor.

4. Device according to one of the preceding claims,
**characterised in that**
the electric coupling area or the electric coupling areas are arranged and/or oriented in regions around the primary conductor in which the magnetic field strength generated by the inductive coupling of the secondary inductor to the primary conductor substantially disappears and/or is tangential to the electrically conductive coupling area or the electrically conductive coupling areas.

5. Device according to one of the preceding claims,
**characterised in that**
the secondary inductor comprises a coil
and **in that** the turns of the coil are arranged in a plane.

6. Device according to one of the preceding claims,
**characterised in that**
the electrically conductive coupling area or the electrically conductive coupling areas is/are oriented parallel to the plane described by turns of the coil,
and/or **in that**
the secondary inductor comprises a coil, the turns of which have an oval shape,
and/or **in that**
the oval shape has two straight, parallel-running regions and **in that** the parallel-running regions are oriented parallel to the direction in which the primary conductor runs.

7. Device according to one of the preceding claims,
**characterised in that**
the electrically conductive coupling area or the electrically conductive coupling areas is/are arranged between the secondary inductor and the primary conductor.

8. Device according to one of the preceding claims,
**characterised in that**
the or each electrically conductive coupling area cover a section of the turns of the secondary inductor on the side facing the primary conductor.

9. Device according to one of the preceding claims,
**characterised in that**
the dimension of the or each electrically conductive coupling area transversely to the direction of the current flow in the secondary inductor in the region, respectively covered by the electrically conductive coupling area or the electrically conductive coupling areas, of the turns of the secondary inductor is limited by or equal to the dimension of the covered region of the turns of the secondary inductor transversely to the direction of the current flow in the secondary inductor in the region, respectively covered by the electrically conductive coupling area or the electrically conductive coupling areas, of the turns of the secondary inductor.

10. Device according to one of the preceding claims,
**characterised in that**
the electrically conductive coupling area or the electrically conductive coupling areas is/are arranged over the straight, parallel-running regions of the oval shape of the secondary inductor.

11. Device according to one of the preceding claims,
**characterised in that**
the electrically conductive coupling area has recesses or notches to reduce eddy currents,
and/or **in that**
the recesses or notches run parallel to the conduction paths of the turns of the secondary inductor,
and/or **in that**
the electrically conductive coupling area is formed from a ribbon cable and **in that** the wires of the ribbon cable are electrically connected,
and/or **in that**
the electrically conductive coupling area has a tap for connection to the second data transmission apparatus and **in that** the electrically conductive coupling area is formed symmetrically with respect to the tap,
and/or **in that**
the arrangement of the electrically conductive coupling areas is symmetrical with respect to the laying direction of the primary conductor,
and/or **in that**
the two electrically conductive coupling areas are identically shaped,
and/or **in that**
the secondary inductor is formed symmetrically with respect to the laying direction of the primary conductor,
and/or **in that**
the secondary inductor of the recess of a ferromagnetic core is arranged,
and/or **in that**
the electrically conductive coupling area covers a region of the recess of the ferromagnetic core towards the primary conductor.

12. Device according to one of the preceding claims,
**characterised in that**
the recess is filled with a casting compound,
**in that** the secondary inductor is embedded in the casting compound
and **in that** the electrically conductive coupling area or the electrically conductive coupling areas are placed on a surface formed by the casting compound,
and/or **in that**
the alternating current applied to the primary conductor has a temporally constant amplitude,
and/or **in that**
the temporally constant amplitude of the alternating current applied to the primary conductor is at least 10 A.

13. Device according to one of the preceding claims,
**characterised in that**
the frequency of the alternating current applied to the primary conductor is at least 10 kHz, in particular lies between 10 and 200 kHz,
and/or **in that**
the first data transmission unit is comprised by a stationary unit,
and/or **in that**
the first data transmission unit is comprised by a further movable unit,
and/or **in that**
the turns of the secondary inductor are arranged in recesses of a plate-shaped module which are open towards one side and **in that** the open side of the recesses of the plate-shaped module is oriented towards the primary conductor or the forward conductor and return conductor of the primary conductor,
and/or **in that**
the turns of the secondary inductor are formed from HF stranded wire,
and/or **in that**
the primary conductor is formed from HF stranded wire,
and/or **in that**
the at least one electrically conductive coupling area is applied to surface regions of the movable unit and/or the turns of the secondary inductor, in particular adhesively bonded and/or laminated and/or vapour-deposited and/or applied by a coating process.

14. System with electric loads which can be inductively supplied from a primary conductor,
**characterised in that**
a device according to one of the preceding claims is provided with a primary conductor and a plurality of movable units, each with a secondary inductor
and **in that** data is transmissible between the units and/or between each unit and a stationary unit via the primary conductor,
wherein the primary conductor is laid in a floor,
**in that** each movable unit is comprised by a vehicle which is able to travel on the surface of the floor,
wherein the secondary inductor and the electrically conductive coupling area are comprised by a plate-shaped pick-up, preferably a pick-up with rectangular basic shape,
and **in that** the pick-up is mounted on the underfloor or on the underside of the vehicle.

## Revendications

1. Dispositif de transmission d'énergie sans contact,
comprenant un conducteur primaire
et une unité (1, 83) mobile par rapport au conducteur primaire (11, 12, 16, 63, 75, 80, 81) et dotée d'une inductance secondaire (3, 23, 64, 85),
sachant que le conducteur primaire (11, 12, 16, 63, 75, 80, 81) et l'inductance secondaire (3, 23, 64, 85) sont couplés par induction,
et qu'au moins un consommateur électrique (73, 83) est raccordé à l'inductance secondaire (3, 23, 64, 85) et est alimenté en énergie électrique à partir du conducteur primaire (11, 12, 16, 63, 75, 80, 81) par l'intermédiaire de l'inductance secondaire (3, 23, 64, 85),
sachant qu'un courant alternatif de fréquence constante est injecté dans le conducteur primaire,
et qu'un circuit résonant est raccordé à l'inductance secondaire, ou que l'inductance secondaire est contenue par un circuit résonant,
sachant que le circuit résonant est accordé à la fréquence du courant alternatif injecté dans le conducteur primaire,
**caractérisé en ce qu'**un premier équipement (70) de transmission de données est raccordé ou couplé au conducteur primaire (11, 12, 16, 63, 75, 80, 81),
**en ce qu'**une surface de couplage (5, 6, 66, 90) électriquement conductrice est formée sur l'unité mobile (1, 83),
**en ce que** la surface de couplage (5, 6, 66, 90) électriquement conductrice forme avec le conducteur primaire (11, 12, 16, 63, 75, 80, 81) un élément de couplage capacitif,
**en ce qu'**un deuxième équipement (71) de transmission de données, qui est raccordé à la surface de couplage électriquement conductrice, est prévu sur l'unité mobile,
et **en ce que** des données peuvent être transmises entre le premier équipement (70) de transmission de données et le deuxième équipement (71) de transmission de données par l'intermédiaire du conducteur primaire (11, 12, 16, 63, 75, 80, 81),
sachant que le conducteur primaire est posé dans un sol,
**en ce que** l'unité mobile est contenue par un véhicule qui peut être déplacé sur la surface du sol,
sachant que l'inductance secondaire et la surface de couplage électriquement conductrice sont contenues par une tête de transmetteur en forme de plaque, de préférence une tête de transmetteur ayant une forme de base rectangulaire,
et que la tête de transmetteur est montée sur le dessous de caisse ou sur le côté inférieur du véhicule.

2. Dispositif selon la revendication 1, **caractérisé en ce que** le conducteur primaire est réalisé sous la forme d'une boucle conductrice oblongue et présente un conducteur aller et un conducteur de retour,
et **en ce que** la surface couverte par le conducteur primaire est égale à un multiple de la surface couverte par l'inductance secondaire,
et/ou **en ce que** l'unité mobile est mobile en translation le long du conducteur primaire, et/ou **en ce que** le conducteur primaire forme une bobine avec des spires circulaires ou dirigées de manière courbe,
**en ce que** l'inductance secondaire comprend une bobine avec des spires circulaires ou dirigées de manière courbe,
**en ce que** la bobine du conducteur primaire et la bobine de l'inductance secondaire sont disposées concentriquement,
et **en ce que** la surface de couplage électriquement conductrice et la bobine de l'inductance secondaire sont disposées concentriquement,
ou **en ce que** l'unité mobile est rotative autour d'un axe par rapport à la bobine du conducteur primaire.

3. Dispositif selon l'une des revendications précédentes, **caractérisé en ce que** l'unité mobile présente deux surfaces de couplage électriquement conductrices,
**en ce qu'**une surface de couplage électriquement conductrice forme un élément de couplage capacitif avec le conducteur aller,
**en ce que** l'autre surface de couplage électriquement conductrice forme un élément de couplage capacitif avec le conducteur de retour,
et **en ce que** les sorties du deuxième équipement de transmission de données sont raccordées aux deux surfaces de couplage électriquement conductrices pour le découplage et/ou l'injection de signaux symétriques du/sur le conducteur primaire.

4. Dispositif selon l'une des revendications précédentes, **caractérisé en ce que** la surface de couplage électrique ou les surfaces de couplage électriques sont disposées et/ou orientées dans des régions autour du conducteur primaire dans lesquelles l'intensité de champ magnétique produite par le couplage inductif de l'inductance secondaire sur le conducteur primaire s'évanouit pour l'essentiel et/ou est tangentielle à la surface de couplage électriquement conductrice ou aux surfaces de couplage électriquement conductrices.

5. Dispositif selon l'une des revendications précédentes, **caractérisé en ce que** l'inductance secondaire comprend une bobine
et **en ce que** les spires de la bobine sont disposées dans un même plan.

6. Dispositif selon l'une des revendications précédentes, **caractérisé en ce que** la surface de couplage électriquement conductrice ou les surfaces de couplage électriquement conductrices est/sont orientées parallèlement au plan décrit par les spires de la bobine,
et/ou **en ce que** l'inductance secondaire comprend une bobine dont les spires présentent une forme ovale,
et/ou **en ce que** la forme ovale présente deux régions rectilignes s'étendant parallèlement, et **en ce que** les régions s'étendant parallèlement sont orientées parallèlement à la direction de développement du conducteur primaire.

7. Dispositif selon l'une des revendications précédentes, **caractérisé en ce que** la surface de couplage électriquement conductrice ou les surfaces de couplage électriquement conductrices est/sont disposées entre l'inductance secondaire et le conducteur primaire.

8. Dispositif selon l'une des revendications précédentes, **caractérisé en ce que** la ou chaque surface de couplage électriquement conductrice recouvre une partie des spires de l'inductance secondaire sur le côté tourné vers le conducteur primaire.

9. Dispositif selon l'une des revendications précédentes, **caractérisé en ce que** la dimension de la ou de chaque surface de couplage électriquement conductrice transversalement à la direction du flux de courant dans l'inductance secondaire dans la région des spires de l'inductance secondaire qui est respectivement recouverte par la surface de couplage électriquement conductrice ou les surfaces de couplage électriquement conductrices, est limitée par la dimension de la région recouverte des spires de l'inductance secondaire transversalement à la direction du flux de courant dans l'inductance secondaire dans la région des spires de l'inductance secondaire qui est respectivement recouverte par la surface de couplage électriquement conductrice ou les surfaces de couplage électriquement conductrices, ou est égale à cette dimension.

10. Dispositif selon l'une des revendications précédentes, **caractérisé en ce que** la surface de couplage électriquement conductrice ou les surfaces de couplage électriquement conductrices est/sont disposées sur les régions rectilignes, s'étendant parallèlement, de la forme ovale de l'inductance secondaire.

11. Dispositif selon l'une des revendications précédentes, **caractérisé en ce que** la surface de couplage électriquement conductrice présente des évidements ou des encoches afin de réduire les courants de Foucault,
et/ou **en ce que** les évidements ou encoches s'étendent parallèlement aux pistes conductrices des spires de l'inductance secondaire,
et/ou **en ce que** la surface de couplage électriquement conductrice est formée d'un câble plat, et **en ce que** les brins du câble plat sont électriquement reliés,
et/ou **en ce que** la surface de couplage électriquement conductrice présente un branchement pour le raccordement au deuxième équipement de transmission de données, et **en ce que** la surface de couplage électriquement conductrice est réalisée symétrique par rapport au branchement,
et/ou **en ce que** la disposition des surfaces de couplage électriquement conductrices est symétrique par rapport à la direction de pose du conducteur primaire,
et/ou **en ce que** les deux surfaces de couplage électriquement conductrices sont de forme identique,
et/ou **en ce que** l'inductance secondaire est réalisée symétrique par rapport à la direction de pose du conducteur primaire,
et/ou **en ce que** l'inductance secondaire est disposée dans l'évidement d'un noyau ferromagnétique,
et/ou **en ce que** la surface de couplage électriquement conductrice couvre une région de l'évidement du noyau ferromagnétique en direction du conducteur primaire.

12. Dispositif selon l'une des revendications précédentes, **caractérisé en ce que** l'évidement est rempli d'une masse de scellement,
**en ce que** l'inductance secondaire est incorporée dans la masse de scellement et **en ce que** la surface de couplage électriquement conductrice ou les surfaces de couplage électriquement conductrices sont placées sur une face supérieure formée par la masse de scellement,
et/ou **en ce que** le courant alternatif injecté dans le conducteur primaire présente une amplitude constante dans le temps,
et/ou **en ce que** l'amplitude constante dans le temps du courant alternatif injecté dans le conducteur primaire est égale à au moins 10 A.

13. Dispositif selon l'une des revendications précédentes, **caractérisé en ce que** la fréquence du courant alternatif injecté dans le conducteur primaire est égale à au moins 10 kHz, en particulier se situe entre 10 et 200 kHz,
et/ou **en ce que** la première unité de transmission de données est contenue par une unité stationnaire,
et/ou **en ce que** la première unité de transmission de données est contenue par une autre unité mobile,
et/ou **en ce que** les spires de l'inductance secondaire sont disposées dans des évidements, ouverts vers un côté, d'un module en forme de plaque
et **en ce que** le côté ouvert des évidements du module en forme de plaque est orienté vers le conducteur primaire ou le conducteur aller et le conducteur de retour du conducteur primaire,
et/ou **en ce que** les spires de l'inductance secondaire sont réalisées en fil de Litz,
et/ou **en ce que** le conducteur primaire est réalisé en fil de Litz,
et/ou **en ce que** la surface de couplage électriquement conductrice au moins unique est apposée sur des régions de la face supérieure de l'unité mobile et/ou des spires de l'inductance secondaire, en particulier collée et/ou stratifiée et/ou déposée en phase vapeur et/ou appliquée par une opération de revêtement.

14. Installation dotée de consommateurs électriques qui peuvent être alimentés par induction à partir d'un conducteur primaire,
**caractérisée en ce qu'**il est prévu un dispositif selon l'une des revendications précédentes, avec un conducteur primaire et plusieurs unités mobiles dotées chacune d'une inductance secondaire,
et **en ce que** des données peuvent être transmises par l'intermédiaire du conducteur primaire entre les unités et/ou entre chaque unité et une unité stationnaire,
sachant que le conducteur primaire est posé dans un sol,
**en ce que** chaque unité mobile est contenue par un véhicule qui peut être déplacé sur la surface du sol,
sachant que l'inductance secondaire et la surface de couplage électriquement conductrice sont contenues par une tête de transmetteur en forme de plaque, de préférence une tête de transmetteur ayant une forme de base rectangulaire,
et que la tête de transmetteur est montée sur le dessous de caisse ou sur le côté inférieur du véhicule.
